# EUROPEAN PATENT SPECIFICATION

(11) **EP 3 104 562 B1**
(45) Date of publication and mention of the grant of the patent: **30.10.2019**
(21) Application number: 15193316.5
(22) Date of filing: 06.11.2015
(51) Int. Cl.: H04L 12/721, H04L 12/741, H04L 12/743

(54) **METHOD OF AGGREGATION OF FLOWS IN ICT NETWORKS**
VERFAHREN ZUR FLUSSAGGREGATION IN IKT-NETZEN
MÉTHODE D'AGRÉGATION DES FLUX DANS DES RÉSEAUX DE TIC

(30) Priority: 11.06.2015 PL 41266315
(43) Date of publication of application: 14.12.2016
(73) Proprietor: Akademia Gorniczo-Hutnicza im. Stanislawa Staszica w Krakowie, 30-059 Krakow (PL)
(72) Inventor: Domzal, Jerzy, 30-059 Kraków (PL); Wójcik, Robert, 30-059 Kraków (PL)
(74) Representative: Górska, Anna

(56) References cited:
- EP-A1- 2 632 091
- US-A1- 2005 083 936
- US-A1- 2015 063 118
- WOJCIK ROBERT ET AL: "Flow-Aware Multi-Topology Adaptive Routing", IEEE COMMUNICATIONS LETTERS, IEEE SERVICE CENTER, PISCATAWAY, NJ, US, vol. 18, no. 9, 1 September 2014 (2014-09-01), pages 1539-1542, XP011558405, ISSN: 1089-7798, DOI: 10.1109/LCOMM.2014.2334314 [retrieved on 2014-09-08]

## Description

The subject of the present invention is a method for flow aggregation over IP (Internet Protocol) networks. The embodiment of the present invention allows for stable network traffic identified by flows beginning from a router.

The main task of the router is routing IP packets to destination nodes, by forwarding packets to appropriate output interfaces. The method according to the invention can be used with routers in which network traffic is identified by flows; where flow identifiers can be determined in many ways. For example, in Flow-Aware Networks (FAN), flows are identified based on five fields in the packet header: source and destination IP addresses, source and destination port numbers, as well as the transport layer protocol identifier.

In most modem routers, network traffic is transmitted via packets. Whenever a packet arrives at a router the destination address to which the packet is destined for is read from its header. Then, the output interface is read from the routing table and a packet is sent to the appropriate output queue of the router. Another approach is for traffic network to be identified by flows. In that case, routers have an additional table, containing at least flow identifiers and corresponding output interface identifiers from the router. When a packet arrives at a router, the flow identifier to which the packet belongs is determined based on its header. If this identifier is on the flow list, the output interface identifier is determined. If the ID is not listed, then it is usually read from the routing table and added to the flow list so that the next flow packets are directed along the same route. The way of handling flows is of a general nature, and can be modified and improved. The main advantage of this approach is to ensure the correct handling of packets belonging to particular flows in one route in the network. In a network without flow identification, packets can reach their destination nodes via different routes, which can cause problems, such as interruptions of a proper order of packets and various delays. On the other hand, the number of flows is one of the fundamental problems in handling of flow-based traffic. There can be many flows in extensive networks, so routers need sufficiently large memory to maintain their flow lists. An even bigger problem might be searching this list with every incoming packet. Those activities can significantly load the device and increase its response time.

The essence of this patent application is a method of establishing the entire route of a flow in an edge router of an autonomous system. This identifier is recorded on a separate list in the router, along with the output identifier. All routers on the route behave in an identical way. Thus, based on a new list, the router always knows where to send the packet. In addition, the number of entries in the list is limited to the number of possible routes on the network, because different flows transmitting traffic along the same route are aggregated under one entry in the table. The number of entries in the table is significantly smaller than the number of flows currently served by the router. As a result, the problem of scalability associated with handling of flows is solved.

The invention, according to the patent application, can be particularly advantageous when used in networks using multipath transmission data, wherein the traffic is identified using flows.

Currently, Multi-Protocol Label Switching (MPLS) is used for transmitting traffic along multiple paths. The MPLS is defined in RFC3031. The MPLS network for packet-forwarding uses labels placed between the header of the second layer and the header of the third layer (the OSI model). The selected packets - for example, the one representing the flow - receive their label at the edge of the network and are routed within the network based on this. In the network, labels are distributed using special signaling protocols, e.g. LDP (Label Distribution Protocol). Routes for packets with a specific label are reserved statically by an operator. The Resource Reservation Protocol - Traffic Engineering (RSVP-TE), as described in RFC3209 (revised and enlarged in RFC5151) is used for this purpose. MPLS does not have solutions for the creation and deletion of paths in a dynamic manner depending on the state of the load of the network. Paths that are established using the MPLS are static. Also, MPLS has no algorithms for searching for alternative, optimal paths.
Multipath transmission can also be achieved by means of Software-Defined Networks (SDN). SDN requires the use of a special controller to maintain current knowledge of the state of the network and, on this basis, make forwarding decisions. For this purpose, it is necessary to implement a signaling protocol between the controller and network nodes - use of a controller provides great possibilities for traffic control. It is then possible to set the routes for flows, including aggregating them into larger groups. However, such arrangements, similarly to MPLS, do not eliminate the need for a complete flows list, at least in the edge routers.
The EP2632091 A1 discloses invention concerning the networks which are managed by a central entity, referred to in the document as Control Apparatus, and what is nowadays commonly referred to as Central Controller. The idea of that invention is to determine the packet's path in the first node, assign an arbitrary path ID for this path and write it to the packet header. Then, Control Apparatus configures all the nodes along the path so they recognize the newly established path ID and forward the packets according to path ID written in the packet header (instead of standard forwarding scheme using the destination address). The advantage of using this scheme is that intermediate nodes do not need to maintain flow tables - they process packets based on path ID only. As several flows can share the same path ID, the number of entries in the intermediate nodes is significantly decreased.
However, this is a solution for centrally-managed networks, such as Software-Defined Networks (SDN), as a central entity is required to configure all intermediate nodes. Without prior configuration, intermediate nodes would not recognize path IDs and would be unable to process packets. Our invention, presented in this patent is targeted for classic networks which work in a distributed way, which means that there is no central entity to manage the network.
The US2005/083936 A1 discloses an apparatus and a method for scalable and dynamic traffic engineering was proposed. The idea of invention is to determine the packet's path in the first node, to calculate the path ID and write it to the packet's header. The path ID is calculated as a bitwise XOR (Exclusive OR) operation on all of the identifiers (such as e.g. IP addresses) of all the nodes along the established path. This constitutes a major difference from the scheme presented in EP2632091 A1, where the value of path ID was unrelated to the actual path (it was a random value identifier). Here, the calculated path ID is directly related to the actual path which is very important.
Every node in the domain calculates the path id (in the same way as presented above) to every other node in the domain. The obtained path IDs are put in the path table, referred to as Explicit Forwarding Information Base (EFIB). When a packet arrives to the intermediate node (it already contains the path ID carried in its header), the router performs the XOR function on the read path ID and its address. Because the XOR function is reversible, after such operation, the router obtains the path ID for further transmission.

Patent application PL404986 entitled "A device for multi-path packet routing in ICT networks and the means of its application"; and a routing method using multiple paths for flow transmission in packet networks entitled "Flow-Aware Multi-Topology Adaptive Routing, FAMTAR" have both previously been disclosed. The methods they describe use multiple paths for forwarding data between nodes. The basic element of the FAMTAR router is a Flow Forwarding Table (FFT), which records the flow identifiers and the output interface identifiers. Entries are created upon arrival to the router of the first packet of a new flow, based on the current routing table. Once a flow has been accepted on its route it will not change until the flow ends. In the network, the states of all links are observed at all times, and if one overloads, it is excluded from the routes for new flows. This makes it possible to use multiple routes while ensuring stable traffic transmission. The solution applied in this current invention can be successfully used to provide flow aggregation in routers using the FAMTAR mechanism.

Another method for traffic transmitted as multipath packets aggregated into groups, was disclosed in patent application WO2006EP65975. Traffic units are determined based on a traffic matrix and the forwarding paths are designated by the central controller in the network. The aim is to increase the amount of traffic forwarded in the network. However, the downside is the need for a central controller.

Another method for forwarding data aggregated in a network into flows was disclosed in patents US6751663 B1 and EP1039694 A2. This aggregation mechanism operates with a, so called, data collection layer, which is responsible for receiving active data flows from the network and properly processing them. The flow aggregation layer is another element of the system responsible for aggregating data flows from the data collection layer. However, the downside of this solution is the need to implement two layers, which in practice, operate as a central controller.

A method of aggregating data flows into clusters in a network and then identifying the flows that could adversely affect transmission across the network was disclosed in patent US8976661 B2. Using the set function, the flows are aggregated into clusters with the NetFuse mechanism, working from a device located between the network nodes and the central controller. The information provided from the network enables NetFuse to keep constructing clusters and guiding selected flows to them. As a result, flows are aggregated and the network is more scalable. However, the downside of this method is, again, the need to use a central controller, as well as an additional device for the NetFuse mechanism.

### Technical solution

The present invention is defined in the appended independent claim 1 to which reference should be made. Advantageous features are set out in the appended dependent claims.

The invention described herein is a device that operates within a single network, hereinafter referred to as the domain, and is administered by a relevant operator. Transmissions can enter the domain, leave the domain, be operated entirely within the domain, and go through the domain.

The essence of this new invention lies in the transfer of the route identifier by each packet in the domain. The route ID is carried in the IP packet header. With the IPv4 protocol, the Type of Service field (Differentiated Services Field acc. to RFC 2474) can be used. With the IPv6 protocol, the Traffic Class fields or a 20-bit Label Flow field can be used.

The Route ID is the result of the one-way hash function acting on the list of nodes on the route. For example, if we were to use the md5 hash algorithm, then for the route:
- "192.168.1.1, 192.168.2.1,
   192.168.10.1"
   we would obtain the following ID:
   - "f231bfbe5577f2alb39f21b2b48b9f3b",
      while the route ID as seen from the perspective of the next node will be a hash calculated for the following route:
      - "192.168.2.1,
         192.168.10.1" which would be:
         - "ce162bc6b3343a705812736956a4ff9f".

The hash algorithm must be selected appropriately, meaning that it must generate a hash that will fit in a particular field of the IP header, as it will be carried by each packet. In addition, it cannot generate the same shortcuts for different routes. The algorithm should also very quickly compute a hash, because each router will have to perform a large number of operations.

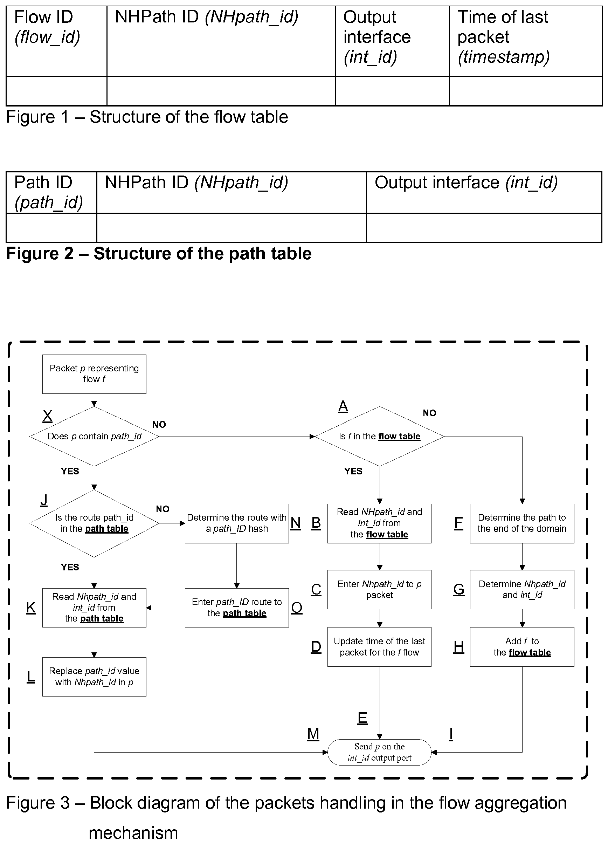

Another characteristic feature of each router is the maintenance of two tables. Flow tables associate a given flow with the route identifier (Fig. 1). The path table contains the route IDs and information on them (Fig. 2).

One table is used for handling each packet. The flow table is required to service packets that do not yet contain the route ID. These are the packets that are incoming to the domain. The path table is required to service packets that already contain the route ID.

Figure 3 shows packets as handled by the invented device. Below is a description of each of the steps.

The first step is to check whether the incoming packet contains the route ID (**X**). Then, depending on whether the packet contains the route ID or not, the router acts as follows:
For each packet **without path ID,** (entering a domain):
1. The router checks whether the flow ID associated with the packet exists in flow table (**A**).
2. If the flow is in the flow table:
   a. The router reads the route ID from the flow table as seen from the perspective of the next node, and also reads the output interface (**B**).
   b. The router puts the route ID field value to the packet as seen from the perspective of the next node (**C**).
   c. The router updates the Time of the last packet field by putting the current timestamp (**D**).
   d. The router forwards the packet to the output interface that was read from the table (**E**).
3. If the flow is not in the flow table:
   a. The router determines the path to the end of the domain (to the destination node or the last node in the domain, if the destination node is outside the domain). The path is represented as a list of nodes (**F**).
   b. The router determines "the path ID as seen from the perspective of the next node" and also reads the output interface for packets (**G**).
   c. The router creates a new entry in the flow table and puts the designated values in the appropriate fields (**H**).
   d. The router forwards the packet to the designated output interface (**I**).

For each packet that **already has a path ID** (served in the domain):
1. The router checks whether the route read from the packet is in the path table (**J**).
2. If the route appears in the path table:
   a. The router reads the path ID as seen from the perspective of the next node, and also reads the output interface from the path table (**K**).
   b. The router replaces the path ID in the packet to the value read from the path ID field as seen from the perspective of the next node (**L**).
   c. The router forwards the packet to the next node (**M**).
3. If the route does not appear in the path table:
   a. The router determines the route (list of nodes), the ID of which equals the path ID recorded in the packet (**N**).
   b. The router determines the path ID as seen from the perspective of the next node, as well as the Output interface, and then adds an entry in the path table (**O**).
   c. Packets support returns to point 2b.

For each packet leaving the domain:
1. The router deletes the path ID in the IP header.
2. The router sends the packet outside the domain according to the operation of a traditional IP network.

The invention as described in the patent has a great advantage, as it reduces the number of flows that each router has to remember in their table. In the invention, there are as many entries in each FFT table as there are currently supported flows in the router. These values can reach millions on core nodes and maintaining such large tables is an inefficient solution. In the invention described in this patent, only the edge routers maintain the flow list. Intermediary routers within a domain keep only a list of possible routes; this is a static list, and its size does not exceed one thousand, even for the largest networks.

## Claims

1. A method for routing a data packet through an explicit path in a data communication network, the data packet having a path_id corresponding to the explicit path, the method comprising: receiving the data packet from the prior hop at the current hop in the network device (X); performing a look-up function into the routing table using an index based on the path_id (J) to determine a routing table entry related to the output interface to which the data packet should be forwarded; extracting the NHpath_id which is a path ID seen from the perspective of the next hop (K); replacing the path_id with the NHpath_id in the data packet (L) wherein path_id is calculated by performing a hash function on the list of the ID's of nodes along the path; and forwarding the data packet to the output interface (M)_{.}

2. The method as defined in Claim 1 wherein path_id is inserted into a Type of Service field of an IP packet header for the data packet.

3. The method as defined in Claim 1 wherein no out-of-band signaling is required for establishing new paths.

## Patentansprüche

1. Eine Methode zum Routing eines Datenpakets über einen expliziten Pfad in einem Datenübertragungsnetzwerk, das Datenpaket mit einer Pfad_ID entsprechend dem expliziten Pfad, die Methode umfasst: die Erhaltung des Datenpakets von der vorherigen Teilstrecke in der aktuellen Teilstrecke im Netzwerkgerät (X); die Durchführung einer Look-up-Funktion in der Routing-Tabelle mithilfe eines Indexes basierend auf der Pfad_ID (J), um einen Eintrag in der Routing-Tabelle in Bezug auf die Ausgabe-Schnittstelle, an die das Datenpaket weitergeleitet werden soll, zu bestimmen; das Extrahieren der NH-Pfad_ID, welcher eine Pfad-ID aus der Perspektive der nächsten Teilstrecke (K) ist; das Ersetzen der Pfad_ID durch die NH-Pfad_ID im Datenpaket (L), wobei die Pfad_ID wird berechnet, indem die Durchführung einer Hash-Funktion auf der Liste der IDs des Knoten innerhalb des Pfads; und die Weiterleitung das Datenpakets an die Ausgabe-Schnittstelle(M).

2. Die Methode nach Anspruch 1, wobei die Pfad_ID in ein Servicetyp-Feld der IP-Paket-Kopfzeile für das Datenpaket eingefügt ist.

3. Die Methode nach Anspruch 1, wobei hierin keine bandexterne Signalgebung für den Aufbau neuer Pfade erforderlich ist.

## Revendications

1. Une méthode de routage d'un paquet de données par un chemin explicite dans un réseau de communication de données, le paquet de données ayant un path_id correspondant au chemin explicite, la méthode consistant à: recevoir le paquet de données du saut précédent au saut actuel dans le dispositif de réseau (X); exécuter une fonction de recherche dans la table de routage en utilisant un index basé sur le path_id (J) pour déterminer une entrée de table de routage liée à l'interface de sortie à laquelle le paquet de données doit être transmis; extraire le NHpath_id qui est un ID de chemin vu du point de vue du saut suivant (K); remplacer le path_id par le NHpath_id dans le paquet de données (L), où le path_id est calculé en effectuant une fonction de hachage sur la liste des ID de nœuds le long du chemin; et transmettre le paquet de données à l'interface de sortie (M).

2. La méthode selon la revendication 1, dans laquelle le path_id est inséré dans un champ Type of Service d'un en-tête de paquet IP pour le paquet de données.

3. La méthode selon la revendication 1, dans laquelle aucune signalisation hors bande n'est requise pour l'établissement de nouveaux chemins.
